# DEMANDE DE BREVET EUROPEEN

(11) **EP 0 856 983 A1**
(43) Date de publication de la demande: **05.08.1998**
(21) Numéro de dépôt: 98400194.1
(22) Date de dépôt: 29.01.1998
(51) Int. Cl.: H04M 17/00, H04M 1/274

(54) **Réseau d'asistance téléphonique et carte d'abonnement destinée à un tel réseau**

(30) Priorité: 29.01.1997 FR 9700963
(71) Demandeur: Graphis Conseil, 75008 Paris (FR)
(72) Inventeur: De Boni, Marino, 94430 Chennevieres sur Marne (FR)
(74) Mandataire: Becker, Philippe

(57) **Abrégé**

L'invention propose la mise en place d'un mode d'accès conditionnel au réseau RTC à partir de cartes d'abonnement permettant d'appeler un serveur capable d'identifier l'appelant, puis d'émettre des numéros d'appel préenregistrés qui seront transmis au réseau RTC par le serveur, afin d'établir la communication entre le terminal de l'appelant et le terminal correspondant au numéro d'appel.

Un tel réseau d'accès conditionnel à un réseau téléphonique commuté RTC (3) entre un terminal (2) de ce réseau et tout autre terminal (5) de ce réseau comporte une carte d'abonnement (1) dans laquelle un premier numéro d'appel préenregistré couplé à un numéro de code connecte le terminal (2) de l'appelant à un serveur de gestion (4) qui l'identifie par son code. Au moins un second numéro d'appel préenregistré dans la carte (1) connecte l'appelant au terminal (5) correspondant à ce second numéro d'appel préenregistré par l'intermédiaire du serveur(4), le serveur effectuant le transfert d'appel en fonction de données mémorisées concernant le client.

Applications à l'assistance téléphonique.

## Description

L'invention se rapporte au domaine de la téléphonie, et plus particulièrement à l'assistance téléphonique par l'utilisation de moyens permettant une mise en communication conditionnelle.

Il existe des catégories de personnes pour lesquelles l'utilisation d'un terminal téléphonique classique par l'intermédiaire d'un pavage numérique pose des problèmes pour composer un numéro d'appel, par exemple les jeunes enfants, les personnes âgées ou les handicapés légers, ou dont les communications sont soumises à contrôle, par exemple les adolescents ou les professionnels, notamment lorsque des communications internationales sont prévisibles.

Classiquement, l'accès conditionnel au réseau téléphonique commuté se fait par soit par abonnement direct auprès d'un opérateur, soit à l'aide de cartes de téléphone prépayées qui autorise l'utilisation d'un nombre limité d'unités téléphoniques auprès d'un opérateur. Aucun moyen n'existe à l'heure actuelle qui puisse permettre de conditionner l'accès au réseau téléphonique de base, réseau de type Réseau Téléphonique Commuté (RTC), à un nombre limité de numéros d'appel à partir de tout terminal, que ce terminal soit privé ou public.

Afin d'atteindre un tel objectif, l'invention propose la mise en place d'un mode d'accès conditionnel au réseau RTC à partir de cartes d'abonnement permettant d'appeler un serveur capable d'identifier l'appelant, puis d'émettre des numéros d'appel préenregistrés qui seront transmis au réseau RTC par le serveur, afin d'établir la communication entre le terminal de l'appelant et le terminal correspondant au numéro d'appel.

Plus précisément, l'invention a pour objet un réseau d'accès conditionnel à un réseau téléphonique commuté RTC entre un appelant utilisant un terminal de ce réseau et tout autre terminal de ce réseau, caractérisé en ce que l'appelant dispose d'une carte d'abonnement dans laquelle un premier numéro d'appel préenregistré couplé à un numéro de code connecte le terminal de l'appelant à un serveur de gestion qui l'identifie, et dans laquelle au moins un second numéro d'appel préenregistré connecte l'appelant au terminal correspondant à ce second numéro d'appel préenregistré par l'intermédiaire du serveur dans le cas où il effectue le transfert d'appel.

L'invention concerne également une carte d'abonnement qui peut être utilisée dans un réseau d'accès conditionnel au réseau RTC, du type de celui défini ci-dessus. Une telle carte d'abonnement comporte en particulier des moyens d'alimentation électrique, un générateur de fréquence vocale couplé à des éléments activateurs par pression selon des circuits prédéterminés et à un haut-parleur. Elle est caractérisée en ce qu'une première mémoire, activée par un élément activateur, déclenche l'émission, par couplage au générateur de fréquences vocales et à travers le haut-parleur, des fréquences vocales correspondant au numéro d'appel du serveur suivie de l'émission d'un code d'identification, et en ce qu'au moins une deuxième mémoire transmet au serveur, par activation d'un autre élément activateur, au moins une fréquence correspondant à un numéro d'appel d'un terminal du réseau RTC que le serveur transfert à ce réseau.

Selon une première forme de réalisation, les numéros d'appel préenregistrés des terminaux pouvant être contactés sont des numéros codés qui sont décryptés par le serveur à l'aide d'une matrice de correspondance. Cette matrice peut être réalisée sous la forme d'un logiciel adapté. Cette solution présente l'avantage de permettre le changement de la programmation des numéros d'appel de terminaux à partir du serveur.

Selon une autre forme de réalisation, les numéros de terminaux préenregistrés dans les mémoires de la carte d'abonnement correspondent aux fréquences d'appel des terminaux concernés.

Selon un exemple de réalisation préféré, le serveur comporte une interface entre le réseau RTC et un logiciel de gestion de comptes-clients attribués aux titulaires des cartes d'abonnement. Ce logiciel assure la gestion en temps réel des durées des communications téléphoniques de chaque client; et détermine également en temps réel un état de son compte.

Les clients potentiels désirant accéder à un tel réseau d'accès, peuvent se procurer les cartes d'abonnement auprès de distributeurs, lesquels s'approvisionnent auprès d'un fabricant agréé.

D'autres caractéristiques et avantages de l'invention apparaîtront à la lecture de la description qui suit, en référence aux figures qui représentent respectivement :
- la figure 1, un schéma synoptique indiquant l'organisation d'un réseau d'accès conditionnel selon l'invention ;
- la figure 2, un exemple de réalisation de la carte d'abonnement selon l'invention utilisée dans un réseau d'accès conditionnel pour être connectée à un réseau RTC ;
- la figure 3, un autre exemple de réalisation de carte d'abonnement selon l'invention.

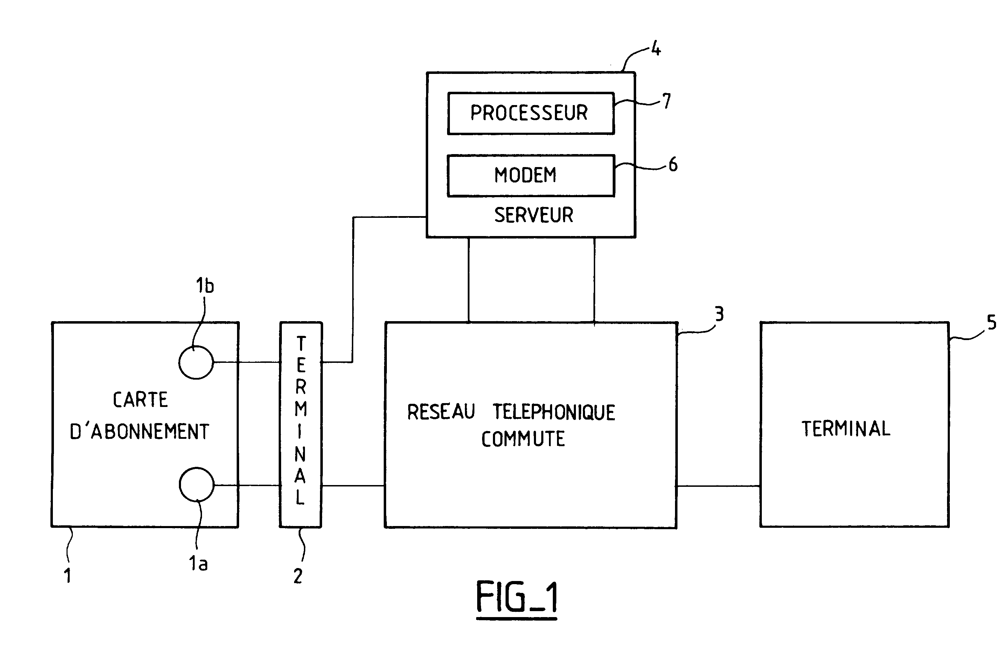

Sur la figure 1, le réseau d'accès conditionnel comporte un serveur 4 connecté au réseau RTC 3 pour permettre l'accès, dans des conditions décrites ci-après, d'un appelant possesseur d'une carte d'abonnement 1, représentée à proximité d'un terminal 2, à tout terminal 5 du réseau RTC 3.

En fonctionnement, l'appelant déclenche à l'aide de la carte d'abonnement 1, par pression sur un bouton 1a, les fréquences vocales correspondant aux numéros d'appel du serveur 4 puis, après un court intervalle de temps, de l'ordre de quelques secondes, cette même pression envoi des fréquences vocales correspondant à un code confidentiel, permettant au serveur 4 d'identifier le client. L'appelant appuie ensuite sur un autre bouton 1b de la carte d'abonnement 1 afin d'émettre, à travers le terminal 2, une série de fréquences vocales correspondant au numéro d'appel du terminal 5, avec lequel l'appelant souhaite entrer en communication.

Le serveur 4 transfert vers le réseau téléphonique RTC 3 le numéro d'appel émis, sous forme de fréquences vocales, par l'appelant à travers le récepteur du terminal 2. La mise en oeuvre de ce transfert est conditionné par les données du compte-client connues du serveur 4.

Les données peuvent avantageusement être rassemblées à l'aide de tout logiciel de type gestion de compte fonctionnant en liaison avec un processeur 7, et dont l'adaptation est à la portée de l'homme de l'art. Selon ces données, la communication entre le terminal 2 et le serveur 4 est coupée, par exemple lorsque le compte-client indique un déficit d'un certain montant préétabli, ou est maintenue afin de servir de porteuse aux fréquences vocales émises par pression sur le bouton 1b correspondant au terminal appelé 5.

Lorsque les conditions sont réunies pour que l'appelant soit interdit d'appel, la coupure de ligne entre l'appelant et le serveur peut être opérée soit automatiquement par le serveur par un signal envoyé sur commande du processeur suivant des conditions préétablies et mémorisées, ou bien semi-automatiquement après vérification par un opérateur.

Le transfert d'appel entre les terminaux appelant et appelé se fait par tout moyen connu de l'homme de l'art, par exemple à l'aide d'un circuit commutateur à mémoires.

Le logiciel de compte-client du serveur 4 peut avantageusement être du type apte à calculer un compte-client en fonction de la durée et du type d'appel téléphonique effectué par l'appelé. L'adaptation de tels logiciels au réseau selon l'invention est également à la portée de l'homme de l'art.

Le serveur 4 est équipé d'un modem 6 servant d'interface entre le réseau téléphonique commuté 3 et les logiciels de gestion des comptes-clients. Ce modem 6 permet de transcrire en langage machine les données fournies par les fréquences vocales transmises par le réseau téléphonique commuté. Il permet en particulier de convertir la série de fréquences vocales correspondant aux codes clients en un numéro d'identification de chaque compte-client et de transmettre le signal de coupure.

Dans l'exemple de réalisation illustré, le numéro d'appel du terminal 5, préenregistré sur la carte d'abonnement 1, correspond à l'ensemble des fréquences d'appel du numéro attribué au terminal appelé 5. Selon une autre forme de réalisation, le numéro pré-enregistré dans la carte d'abonnement 1 est un numéro abrégé dont la fréquence (ou une suite de fréquences) se traduit dans une matrice de correspondance par le numéro d'appel du terminal 5 tel qu'attribué par le réseau RTC.

La correspondance entre le numéro abrégé et le numéro complet est effectué par le processeur 7 à travers le modem de conversion 6. Le serveur 4 effectue alors l'appel vers le terminal 5 en utilisant son numéro complet, puis transfert cet appel entre le terminal 2 et le terminal 5. Ce mode de réalisation présente l'avantage de permettre une reprogrammation du terminal avec qui le client souhaite que l'appelant communique. Un simple courrier envoyé au serveur, accompagné du numéro de code confidentiel, peut servir d'instruction à une telle reprogrammation.

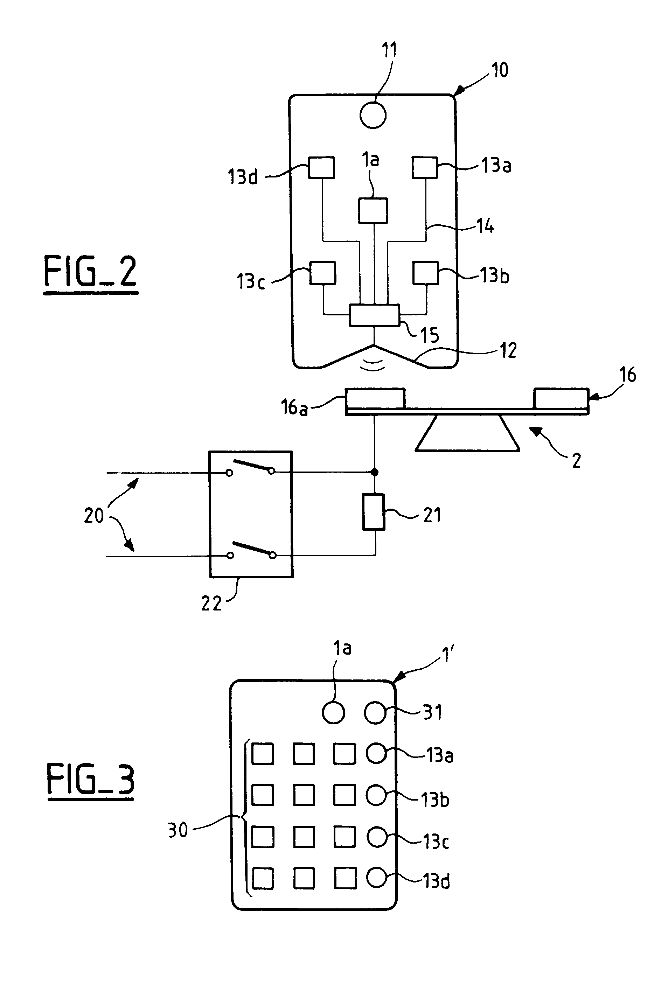

La figure 2 représente un exemple de réalisation d'une carte d'abonnement téléphonique 10, pouvant être utilisée dans le réseau d'accès conditionnel décrit précédemment. Une telle carte se compose d'une pellicule en matériau plastique souple (non représentée) recouvrant une plaque de circuit intégré présentant des logements pour une pile d'alimentation électrique 11 et pour un haut-parleur 12, et des éléments d'activation par pression, boutons 13a à 13d, reliés par un circuit intégré 14 à un générateur de fréquences 15. Les composants électroniques peuvent être réalisés selon toute technique connue de l'homme de l'art, par exemple en technologie CMOS. Les fréquences générées par le générateur 15 correspondent aux douze fréquences vocales dont les combinaisons par deux correspondent aux touches d'un pavage numérique classique équipant les terminaux téléphoniques classiques.

L'activation du bouton 1a établit la liaison au serveur et la reconnaissance du client. L'activation de chaque bouton 13a à 13d active les fréquences préétablies par les liaisons du circuit intégré 14 reliant ledit bouton aux signaux mémorisés dans le générateur de fréquences 15 et correspondant aux fréquences désirées. Ces fréquences sont ensuite amplifiées dans le haut-parleur 12 puis transmises au réseau téléphonique commuté par l'intermédiaire du récepteur 16a du combiné 16 du terminal 2. Ces fréquences sont transmises en lignes 20 à travers le circuit de transmission des fréquences vocales 21 et l'interface de prise de ligne 22.

Les pré-enregistrements effectués par le fabricant par la mise en place des liaisons du circuit intégré correspondent soit à une ou plusieurs fréquences vocales, soit à la combinaison de fréquences vocales correspondant au numéro du terminal que l'on souhaite appeler parmi les numéros d'accès prévus, en fonction du mode préalablement choisi selon la description qui précède.

Dans un autre exemple de réalisation de carte telle qu'illustrée sur la figure 3, un numéro préenregistré peut correspondre à une liberté d'accès à l'ensemble des numéros d'appel du réseau téléphonique RTC. Pour qu'il en soit ainsi, l'appelant accède, après avoir appuyé sur ce bouton "libre" 31, à la numérotation de tout numéro d'appel à l'aide du pavage numérique du terminal, ou à l'aide d'un pavage numérique 30 disposé dans la carte d'abonnement conformément à la figure 3. En appuyant sur le bouton "libre" 31 de la carte d'abonnenement 1' représentée, l'accès au réseau commuté peut encore être modulé par le serveur en fonction des données dont il dispose. Le processeur du serveur peut en effet être programmé pour limiter les numéros d'accès "libre" en fonction de la distance (par limitation à un territoire national, à une région, ou à un certains états) et/ou en fonction de la durée. Dans l'exemple de réalisation illustrée, l'accès « libre » est obtenu à laide d'un élément activateur supplémentaire par rappport aux activateurs 13a à 13d préenregistrés. Dans d'autres réalisations, l'activateur d'accès libre peut être unique, mis à part l'activateur la d'appel au serveur.

L'invention n'est pas limitée aux exemples de réalisation décrits et représentés. Le nombre de numéros d'appel préenregistrés sur la carte d'abonnement peut par exemple varier en fonction soit du nombre de numéros que le client désire utiliser, soit du fait de la technologie mise en oeuvre.

Les pré-enregistrements des numéros d'appel peuvent être effectués par l'utilisation de mémoires dédiées, reliées au générateur de fréquences et déclenchées par les éléments activateurs pour activer le générateur de fréquences selon une suite de signaux correspondants aux fréquences désirées. Cette forme de réalisation est plus particulièrement destinée au cas où les numéros d'appel préenregistrés correspondent aux séries de fréquences des numéros d'appel des terminaux du réseau RTC sélectionnés.

Les deux types de réalisation de carte décrits précédemment en référence aux figures 2 et 3 peuvent être combinés, l'accès au réseau RTC par le bouton « libre » pouvant être conditionné par la transmission d'un code spécial au serveur composé sur le pavage numérique.

D'autre part, les communications obtenues dans le cadre d'un accès conditionnel selon l'invention ne sont pas limitées aux communications orales mais peuvent s'étendre à la transmission de toute donnée, par exemple fac-similé, traitement de texte, etc. Par ailleurs, l'alimentation électrique de la carte peut être réalisée par tout moyen, par exemple à partir de cellules solaires disposées sur la carte.

## Revendications

1. Réseau d'accès conditionnel à un réseau téléphonique commuté RTC (3) entre un appelant utilisant un terminal (2) de ce réseau et tout autre terminal (5) de ce réseau, caractérisé en ce que l'appelant dispose d'une carte d'abonnement (1,10,1') dans laquelle un premier numéro d'appel préenregistré couplé à un numéro de code connecte le terminal (2) de l'appelant à un serveur de gestion (4) qui l'identifie par son code, et dans laquelle au moins un second numéro d'appel préenregistré connecte l'appelant au terminal (5) correspondant à ce second numéro d'appel préenregistré par l'intermédiaire du serveur (4) dans le cas où il effectue le transfert d'appel.

2. Réseau d'accès conditionnel selon la revendication 1, caractérisé en ce que le serveur (4) comporte en particulier un modem d'interface (6) entre le réseau RTC (3) et des logiciels de gestion et d'application en temps réel de comptes-clients attribués aux titulaires des cartes fonctionnant en liaison avec un processeur (7), l'accès au réseau RTC pour une carte donnée (1,10,1') étant conditionné par une analyse personnalisée du serveur (4) à l'aide du processeur (7) en fonction des données fournies par lesdits logiciels et de conditions préétablies et mémorisées.

3. Réseau d'accès conditionnel selon la revendication 2, caractérisé en ce que la communication entre le terminal (2) et le serveur (4) est coupée ou est maintenue en fonction des conditions préétablies et mémorisées dans le processeur (7), la coupure de ligne entre l'appelant et le serveur (4) est soit opérée automatiquement par un signal envoyé sur commande du processeur suivant lesdites conditions préétablies et mémorisées, soit semi-automatiquement après vérification par un opérateur.

4. Réseau d'accès conditionnel selon l'une des revendications précédentes, caractérisé en ce que les numéros d'appel préenregistrés des terminaux (5) pouvant être contactés sont des numéros codés qui sont décryptés par le serveur (4) à l'aide d'une matrice de correspondance entre le numéro codé et le numéro d'appel complet.

5. Réseau d'accès conditionnel selon l'une des revendications 1 à 3, caractérisé en ce que les numéros d'appel préenregistrés de la carte d'abonnement (1,10,1') correspondent à la série de fréquences d'appel des numéros des terminaux concernés sur le réseau RTC.

6. Carte d'abonnement (1,10) pour réseau d'accès conditionnel au réseau RTC selon l'une quelconque des revendications 1 à 3, caractérisée en ce qu'elle comporte des moyens d'alimentation électrique (11), un générateur de fréquences vocales (15) couplé à des éléments activateurs par pression (1a, 13a à 13d) par un circuit intégré (14) et à un haut-parleur (12), un élément activateur (1a) déclenchant l'émission, par couplage au générateur de fréquences vocales (15) et à travers le haut-parleur (12), des fréquences vocales correspondant au numéro d'appel du serveur (4) suivie de l'émission d'un code d'identification, et en ce qu'au moins un deuxième activateur (13a à 13d) transmet au serveur (4) au moins une fréquence correspondant à un numéro d'appel d'un terminal (5) du réseau RTC que le serveur transfert à ce réseau.

7. Carte d'abonnement selon la revendication 6 en particulier pour un réseau d'accès conditionnel selon la revendication 4 ou 5, caractérisée en ce que le circuit intégré (14) comporte des liaisons reliant les éléments activateurs (13a à 13d) aux signaux mémorisés dans le générateur de fréquences (15) et correspondant aux fréquences définissant le numéro codé.

8. Carte d'abonnement selon la revendication 6 en particulier pour réseau d'accès conditionnel selon la revendication 5, caractérisée en ce qu'elle comporte des mémoires dédiées, déclenchées par les éléments activateurs (13a à 13d) et reliées au générateur de fréquences pour activer les fréquences désirées selon une suite de signaux correspondants à ces fréquences.

9. Carte d'abonnement (1') pour réseau d'accès conditionnel au réseau RTC selon la revendication 6, caractérisée en ce qu'elle comporte un élément activateur (31) « libre » d'accès à tout numéro d'appel du réseau RTC à l'aide du pavage numérique du terminal (2) ou d'un pavage numérique (30) disposé dans la carte d'abonnement (1').

10. Carte d'abonnement pour réseau d'accès conditionnel au réseau RTC selon la revendication 9, caractérisée en ce que l'accès « libre » au réseau RTC est modulé par le serveur (14) en limitant les numéros d'accès « libre » en fonction de la distance et/ou de la durée de l'appel.

11. Carte d'abonnement pour réseau d'accès conditionnel au réseau RTC selon la revendication 9 ou 10, caractérisée en ce que l'accès « libre » est modulé en fonction d'un code confidentiel composé sur le pavage numérique.
